# FASCICULE DE BREVET EUROPEEN

(11) **EP 1 873 062 B1**
(45) Date de publication et mention de la délivrance du brevet: **10.08.2011**
(21) Numéro de dépôt: 07111086.0
(22) Date de dépôt: 26.06.2007
(51) Int. Cl.: B64G 1/22

(54) **Dispositif de positionnement en rotation à grande durée de vie pour applications spatiales**
Drehpositionierungsvorrichtung mit langer Lebensdauer für Raumanwendungen
Rotation positioning device with long life-time for space applications

(30) Priorité: 27.06.2006 FR 0652667
(43) Date de publication de la demande: 02.01.2008
(73) Titulaire: Thales, 92200 Neuilly Sur Seine (FR)
(72) Inventeur: Baudasse, Yannick, 06130 GRASSE (FR); Brossier, Jérôme, 06156 Cannes La Bocca (FR)
(74) Mandataire: Lucas, Laurent Jacques

(56) Documents cités:
- EP-A1- 0 481 857
- EP-A1- 0 738 656
- FR-A1- 2 703 415
- US-A- 3 587 999
- US-A1- 2003 192 994

## Description

Le domaine de la présente invention est celui des composants de guidage pour les équipements utilisés dans les applications spatiales, telles par exemple que la fabrication de satellites, et en particulier celui des dispositifs de pointage en rotation pour appendices spatiaux.

Dans les applications spatiales il est nécessaire de pouvoir orienter certains éléments d'un satellite ou d'un véhicule spatial, tels qu'une antenne, un mât, etc., dans une direction prédéterminée afin, par exemple, de les diriger vers une étoile fixe, de conserver un pointage vers un point à la surface de la terre, ou bien encore de balayer une zone particulière à la surface de la terre ou d'un astre quelconque. Ces positionnements doivent être fréquemment corrigés pour compenser d'inévitables dérives dans la tenue de cette direction et ces multiples corrections entraînent la réalisation d'un nombre important de cycles de micro-rotation pour ces appendices spatiaux et pour leurs dispositifs de guidage.

Compte tenu du caractère irréversible de la mise en orbite d'un satellite, il est nécessaire de prévoir lors de la conception de l'engin spatial, une durée de vie, mesurée en nombre de cycles, très importante pour ces équipements, de façon à garantir leur capacité à résister à ces très nombreuses sollicitations.

Cette phase dite de pointage fin fait généralement suite à une phase de déploiement, au cours de laquelle les appendices spatiaux sont sortis du conditionnement qui a été défini pour le lancement et sont mis en position pour assurer leur fonction. Même si dans certains cas on peut avoir besoin de recourir à des déploiements multiples, ceux-ci restent en nombre très limité (au plus quelques dizaines, voire une centaine) et ne nécessitent pas que les dispositifs de pointage soient dimensionnés de façon aussi contraignante que pour des mouvements de pointage fin.

Comme ces équipements doivent fonctionner dans le vide spatial, on se heurte à un problème particulier lié à la difficulté d'assurer une bonne lubrification des parties en contact lors de ces rotations.

La lubrification des pièces effectuant des déplacements linéaires est correctement résolue par l'installation de joints métalliques fixes et de soufflets refermant la zone de débattement des pièces, ce qui permet de fonctionner en ambiance lubrifiée (par bain d'huile dans une enceinte fermée) et d'autoriser des cycles de déplacement linéaires en nombre important.

Cette configuration ne peut être reproduite pour des mouvements en rotation, l'étanchéité entre le dispositif de guidage et l'arbre qu'il entraîne ne pouvant être réalisée que par des joints et donc par des frottements entre les pièces tournantes. La durée de vie résultante pour de tels systèmes en est fortement dégradée.

Les réalisations antérieures ont donc été obligées de choisir, pour ces mouvements en rotation, entre des systèmes à base de roulements, de paliers, rotules, ou rail à billes, etc. capables d'assurer des déplacements angulaires de grande amplitude, et des systèmes à base de composants flexibles, sans contact entre les pièces tournantes, mais qui ne permettent que des déplacements angulaires limités.

Du fait d'une lubrification imparfaite, les premiers sont sensibles aux phénomènes de grippage par cohésion moléculaire des matériaux en vis-à-vis et n'ont pas une durée de vie importante. Le phénomène est encore accentué lorsqu'on veut leur faire faire des micro-mouvements, à cause de phénomènes de migration ou d'évaporation des lubrifiants. Les seconds n'ont pas besoin de lubrification et ont donc une durée de vie compatible avec l'emploi visé mais ils sont limités dans leur domaine d'utilisation par leur faible déplacement angulaire.

La présente invention a pour but de remédier à ces inconvénients en proposant un dispositif de positionnement en rotation capable, avec une même motorisation, de mouvements angulaires de grande amplitude à relativement faible durée de vie pour une phase dite de déploiement et de mouvements de faible amplitude à très grande durée de vie pour une phase dite de pointage fin.

Le document EP 0 738 656 A1 décrit toutes les caractéristiques du préambule de la revendication 1.

A cet effet, l'invention a pour objet un dispositif de positionnement en rotation d'un élément mobile pour équipement spatial comprenant une pièce attachée à la partie fixe dudit équipement et un manche actionnant la partie mobile dudit équipement, ledit manche étant lié de façon rigide à une première bague d'un roulement à billes ou à rouleaux et ladite pièce fixe étant liée à la seconde bague dudit roulement, caractérisé en ce que la liaison entre ladite pièce fixe et la seconde bague est une liaison élastique en rotation autour de l'axe dudit roulement et en ce qu'une butée est attachée de façon rigide à une des bagues pour coopérer avec un élément attaché de façon rigide à l'autre bague, de sorte que la rotation relative des deux bagues dudit roulement est limitée angulairement.

Un tel dispositif permet d'effectuer des mouvements de grande amplitude par l'intermédiaire du roulement tant qu'on est dans la phase de déploiement puis d'arrêter la rotation du roulement lorsqu'on atteint la zone de pointage fin.

De façon préférentielle le positionnement angulaire de la butée sur sa bague support est réglable.

Cela permet de choisir la direction à partir de laquelle sera effectué le pointage fin.

Avantageusement la liaison élastique est au repos quand l'élément destiné à coopérer avec la butée n'est pas en contact avec ladite butée.

Dans cette configuration les deux moyens de mise en rotation sont indépendants et n'interfèrent pas dans le positionnement de la partie mobile de l'équipement.

Dans un mode préférentiel de réalisation la pièce fixe a une forme de couronne sensiblement circulaire coaxiale avec ledit roulement.

De façon préférentielle la liaison élastique est assurée par des bras en matériau flexible disposés radialement entre la pièce fixe et la seconde bague.

Avantageusement ledit manche est fixé sur le moyeu de la bague intérieure dudit roulement.

Selon un mode préférentiel de réalisation le manche est confondu avec l'élément destiné à coopérer avec la butée.

L'invention sera mieux comprise, et d'autres buts, détails, caractéristiques et avantages de celle-ci apparaîtront plus clairement au cours de la description explicative détaillée qui va suivre, d'un mode de réalisation de l'invention donnée à titre d'exemple purement illustratif et non limitatif, en référence aux dessins schématiques annexés.

Sur ces dessins :
- la figure 1 est une vue en coupe d'un dispositif de positionnement en rotation selon un mode de réalisation de l'invention, la butée angulaire étant dans une première position ;
- la figure 2 est une même vue en coupe du dispositif de positionnement en rotation, la butée angulaire étant dans une seconde position ;
- la figure 3 est une même vue en coupe du dispositif de positionnement en rotation, en fonctionnement au début de la phase de déploiement ;
- la figure 4 est une même vue en coupe du dispositif de positionnement en rotation, en fonctionnement en fin de la phase de déploiement et au début de la phase de pointage fin ;
- la figure 5 est une même vue en coupe du dispositif de positionnement en rotation, en fonctionnement au cours de la phase de pointage fin.

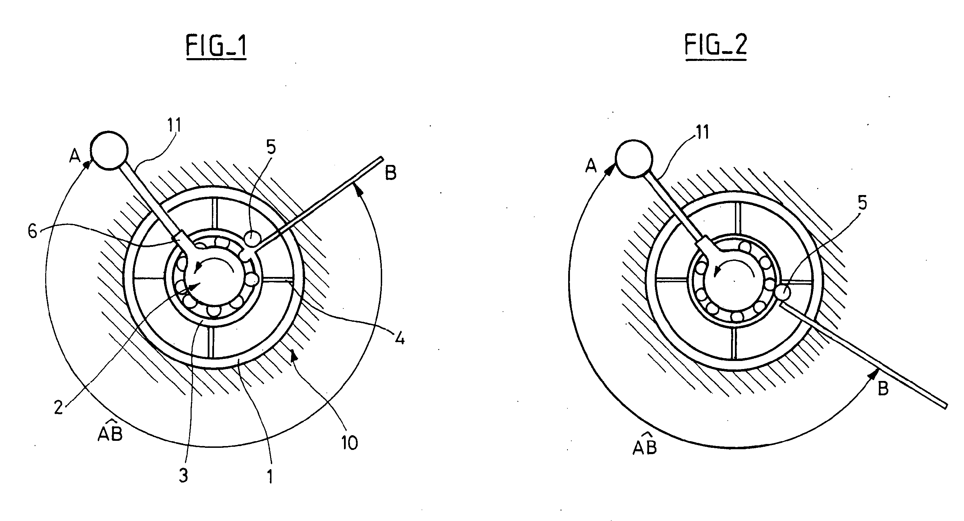

En se référant à la figure 1, on voit un dispositif de positionnement en rotation selon l'invention comprenant une couronne circulaire 1 liée à une partie fixe 10 de l'équipement du satellite concerné. Cette couronne 1 est reliée via des bras flexibles 4 à une seconde couronne circulaire 3 coaxiale avec la première, faisant bague extérieure d'un roulement du type à billes ou à rouleaux. La bague intérieure dudit roulement est montée sur un moyeu 2 sur lequel est fixée, via un manche de liaison 6, une pièce 11 de conduite en rotation de la partie mobile de l'équipement du satellite concerné.

Sur la bague extérieure du roulement est fixée une butée 5 sur laquelle vient s'arrêter le manche 6, de façon à empêcher la rotation du moyeu 2 au-delà de cette position de butée.

En se référant aux figures 1 et 2, on voit deux positions angulairement différentes de la butée 5 sur la bague extérieure 3 du roulement et subséquemment deux angles différents A^B de débattement angulaire dudit manche 6, entre une position A lorsque la pièce 11 est en début de déploiement et une position B lorsqu'elle est en fin de déploiement.

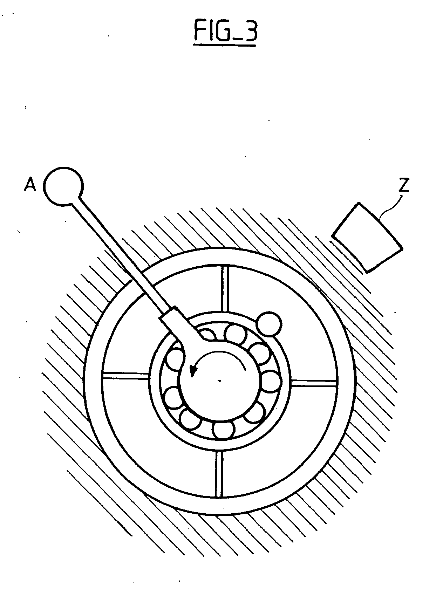

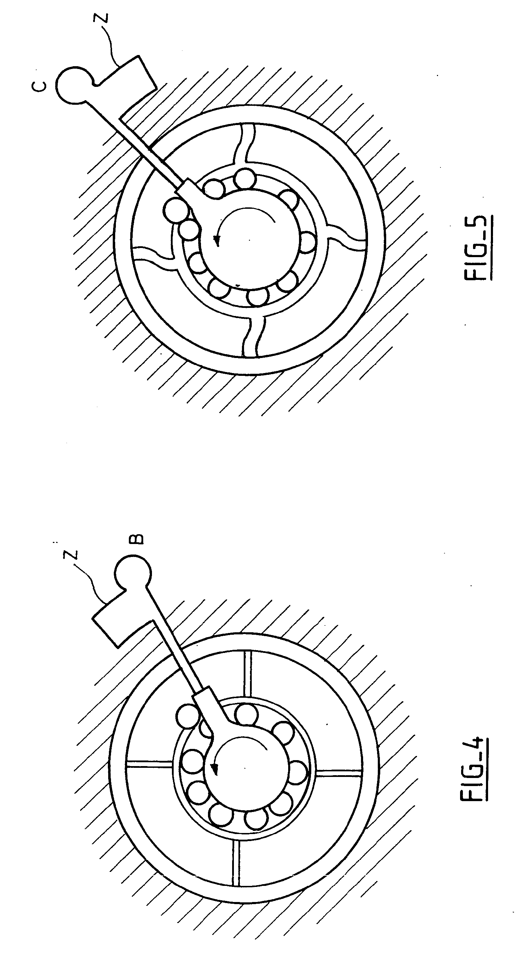

En référence aux figures 3 à 5, on voit le manche 6 et la pièce 11 dans des positions A, B et C correspondant respectivement aux positions de début de déploiement, de fin de déploiement et de débattement maximum dans la zone de pointage. La zone Z indique le débattement autorisé au manche 6 par la flexibilité des bras 4 lorsque ledit manche 6 est en contact avec la butée 5, c'est-à-dire lorsque le dispositif est en situation de pointage fin.

On va maintenant décrire le fonctionnement de l'invention lors d'une phase de déploiement de l'équipement concerné du satellite suivie d'une phase de pointage fin.

Au départ l'équipement concerné du satellite est dans une position d'attente représentée par la pièce 11 dans la position A. Cette pièce doit être amenée dans la zone Z, comprise entre les positions B et C, de façon que l'équipement concerné du satellite puisse assurer sa fonction de pointage dans une direction déterminée ou de balayage d'une zone terrestre. L'étendue de la zone Z est définie par l'homme du métier, lors de la conception du dispositif de positionnement en rotation, de façon à obtenir une amplitude suffisante pour couvrir les fluctuations à venir sur la direction que l'on entend poursuivre, tout en tenant compte des capacités de déformation élastique du matériau des bras flexibles 4.

En utilisation, préalablement à tout déploiement, la zone Z est positionnée, par l'opérateur avant le lancement ou en orbite par tout système automatique ou télécommandé prévu à cet effet, par le placement de la butée 5 en face de la direction ou de la zone à couvrir.

La partie mobile de l'équipement concerné est tout d'abord mise en rotation, au travers d'un moyen d'entraînement classique non représenté sur les figures, en actionnant le roulement à billes ou à rouleaux du dispositif de positionnement en rotation.

A la fin du déploiement, c'est à dire lorsque la rotation de cette partie mobile a atteint le point où le manche 6 vient en contact sur la butée 5, le roulement s'immobilise, c'est-à-dire que ses deux bagues restent fixes l'une par rapport à l'autre.

La rotation de l'élément mobile de l'équipement concerné peut cependant se poursuivre au-delà de cette position grâce à la flexibilité des bras 4 situés entre le roulement et la partie fixe de l'équipement concerné.

Le moyen d'entraînement classique poursuit son action pour positionner l'élément mobile de l'équipement concerné dans la direction précise souhaitée. Ce faisant il pousse en rotation l'ensemble monobloc constitué désormais par la pièce 11, le manche 6, la butée 5 et le roulement et déforme les bras flexibles 4 jusqu'à ce que la direction souhaitée soit atteinte.

La butée 5 ayant été correctement positionnée à cet effet, la pièce 11 peut se déplacer en rotation, en restant dans la zone Z qui correspond aux fluctuations à couvrir sur la direction souhaitée, sans que le roulement ne soit lui-même sollicité en rotation.

L'invention permet ainsi d'effectuer les mouvements de grande amplitude, qui sont relativement peu nombreux, lors des phases de déploiement en actionnant le roulement à billes ou à rouleaux et les nombreux mouvements de faible amplitude demandés lors de la phase de pointage fin par la déformation des bras flexibles.

Du fait que tous les petits mouvements sont effectués sans utilisation du roulement celui-ci est peu sollicité et ne consomme qu'un nombre limité des cycles de fonctionnement de sa durée de vie. Celle-ci est alors compatible avec celle d'un satellite, même si les conditions de lubrification ne sont pas optimales.

A contrario les petits mouvements sont réalisés sans faire appel à des pièces entrant en contact entre elles, qui ne nécessitent ainsi pas de lubrification. La durée de vie du dispositif de pointage fin, mesurée en nombre de cycles de fonctionnement, est alors relativement grande.

L'invention a été décrite en choisissant sur les figures un sens particulier pour la rotation du manche de la position A vers la position B. Ce choix ne constitue pas une caractéristique essentielle de l'invention, le dispositif pouvant fonctionner dans les deux sens.

De même le dispositif a été décrit avec des bras flexibles 4 positionnés à l'extérieur du roulement et avec le bras 6 porté par le moyeu 2 du roulement. L'invention peut également être réalisée avec des bras flexibles 4 positionnés à l'intérieur du roulement, entre sa bague intérieure et une pièce fixe; le bras est alors porté par la couronne circulaire extérieure, qui dans ce cas, est mobile.

Bien que l'invention ait été décrite en relation avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Dispositif de positionnement en rotation d'un élément mobile pour équipement spatial comprenant une pièce (1) attachée à la partie fixe (10) dudit équipement et un manche (6) actionnant la partie mobile (11) dudit équipement, ledit manche (6) étant lié de façon rigide à une première bague d'un roulement à billes ou à rouleaux et ladite pièce fixe (1) étant liée à la seconde bague (3) dudit roulement, **caractérisé en ce que** la liaison entre ladite pièce fixe (1) et la seconde bague (3) est une liaison élastique (4) en rotation autour de l'axe dudit roulement et **en ce qu'**une butée (5) est attachée de façon rigide à une des bagues (3) pour coopérer avec un élément (6) attaché de façon rigide à l'autre bague, de sorte que la rotation relative des deux bagues dudit roulement est limitée angulairement.

2. Dispositif de positionnement en rotation selon la revendication 1 dans lequel le positionnement angulaire de la butée (5) sur sa bague support (3) est réglable.

3. Dispositif de positionnement en rotation selon la revendication 1 ou 2 dans lequel la liaison élastique (4) est au repos quand l'élément destiné à coopérer avec la butée (5) n'est pas en contact avec ladite butée.

4. Dispositif de positionnement en rotation selon l'une des revendications 1 à 3 dans lequel la pièce fixe (1) a une forme de couronne sensiblement circulaire coaxiale avec ledit roulement.

5. Dispositif de positionnement en rotation selon la revendication 4 dans lequel la liaison élastique est assurée par des bras (4) en matériau flexible disposés radialement entre la pièce fixe (1) et la seconde bague (3).

6. Dispositif de positionnement en rotation selon l'une des revendications 1 à 5 dans lequel ledit manche (6) est fixé sur le moyeu (2) de la bague intérieure dudit roulement.

7. Dispositif de positionnement en rotation selon la revendication 6 dans lequel le manche (6) est confondu avec l'élément destiné à coopérer avec la butée.

8. Système de guidage pour équipement spatial comportant un dispositif de positionnement selon l'une des revendications 1 à 7.

9. Équipement spatial comportant un système de guidage selon la revendication 8.

## Claims

1. A device for rotational positioning of a movable element for space equipment, comprising a piece (1) attached to the fixed part (10) of said equipment and a handle (6) operating the movable part (11) of said equipment, said handle (6) being rigidly linked to a first race of a ball or roller bearing and said fixed piece (1) being linked to the second race (3) of said bearing, **characterised in that** the link between said fixed piece (1) and said second ring (3) is an elastic link (4) rotating around the axis of said bearing and **in that** a stop (5) is rigidly attached to one of the races (3) so as to cooperate with an element (6) rigidly attached to the other race, so that the relative rotation of the two races of said bearing is limited angularly.

2. The rotational positioning device according to claim 1, wherein the angular positioning of the stop (5) on its support race (3) is adjustable.

3. The rotational positioning device according to claim 1 or 2, wherein the elastic link (4) is at rest when the element designed to cooperate with the stop (5) is not in contact with said stop.

4. The rotational positioning device according to any one of claims 1 to 3, wherein the fixed piece (1) has a substantially circular ring shape coaxial with said bearing.

5. The rotational positioning device according to claim 4, wherein the elastic link is assured by arms (4) made from a flexible material arranged radially between the fixed piece (1) and the second race (3).

6. The rotational positioning device according to any one of claims 1 to 5, wherein said handle (6) is fixed to the hub (2) of the internal race of said bearing.

7. The rotational positioning device according to claim 6, wherein the handle (6) coincides with the element designed to cooperate with the stop.

8. A guiding system for space equipment comprising a positioning device according to any one of claims 1 to 7.

9. Space equipment comprising a guiding system according to claim 8.

## Patentansprüche

1. Vorrichtung zum rotatorischen Positionieren eines beweglichen Elements für Raumfahrtausrüstung, umfassend ein Stück (1), das am festen Teil (10) der Ausrüstung angebracht ist, und einen Griff (6) zum Betätigen des beweglichen Teils (11) der Ausrüstung, wobei der Griff (6) starr mit einem ersten Laufring eines Kugel- oder Rollenlagers verbunden ist und der feste Teil (1) mit dem zweiten Laufring (3) des Lagers verbunden ist, **dadurch gekennzeichnet, dass** die Verbindung zwischen dem festen Stück (1) und dem zweiten Laufring (3) eine elastische Verbindung (4) ist, die um die Achse des Lagers rotiert, und **dadurch**, dass ein Anschlag (5) starr an einem der Laufringe (3) angebracht ist, um mit einem starr an dem anderen Laufring angebrachten Element (6) zusammenzuwirken, so dass die relative Rotation der beiden Laufringe des Lagers winkelmäßig begrenzt wird.

2. Rotatorische Positionierungsvorrichtung nach Anspruch 1, wobei die winkelmäßige Positionierung des Anschlags (5) auf seinem Laufringträger (3) verstellbar ist.

3. Rotatorische Positionierungsvorrichtung nach Anspruch 1 oder 2, wobei die elastische Verbindung (4) im Ruhezustand ist, wenn das zum Zusammenwirken mit dem Anschlag (5) ausgelegte Element nicht mit dem Anschlag in Kontakt ist.

4. Rotatorische Positionierungsvorrichtung nach einem der Ansprüche 1 bis 3, wobei das feste Stück (1) die Form eines im Wesentlichen kreisförmigen Rings koaxial zu dem Lager hat.

5. Rotatorische Positionierungsvorrichtung nach Anspruch 4, wobei die elastische Verbindung durch Arme (4) aus einem flexiblen Material bereitgestellt wird, die zwischen dem festen Stück (1) und dem zweiten Laufring (3) radial angeordnet sind.

6. Rotatorische Positionierungsvorrichtung nach einem der Ansprüche 1 bis 5, wobei der Griff (6) an der Nabe (2) des inneren Laufrings des Lagers befestigt ist.

7. Rotatorische Positionierungsvorrichtung nach Anspruch 6, wobei der Griff (6) mit dem zum Zusammenwirken mit dem Anschlag ausgelegten Element zusammenfällt.

8. Führungssystem für Weltraumausrüstung, umfassend eine Positionierungsvorrichtung nach einem der Ansprüche 1 bis 7.

9. Raumfahrtausrüstung, umfassend ein Führungssystem nach Anspruch 8.
